# EUROPEAN PATENT SPECIFICATION

(11) **EP 2 846 928 B1**
(45) Date of publication and mention of the grant of the patent: **15.08.2018**
(21) Application number: 13721701.4
(22) Date of filing: 07.05.2013
(51) Int. Cl.: B05B 13/04, C03C 17/00

(54) **Coating line integrated in a glass container manufacturing process with improved application of a cold end coating, method of its operation and resultant glass container**
In einem Herstellungsverfahren für Glasbehälter integrierte Beschichtungsanlage mit verbesserter Kaltendvergütung, Verfahren zu dessen Betrieb und sich daraus ergebende Glasbehälter
Chaîne de revêtement intégrée dans un procédé d'élaborer récipients en verre avec traitement à froid perfectionné, procédé de son opération et récipient en verre tellement élaboré

(30) Priority: 09.05.2012 EP 12167331; 05.06.2012 US 201261655603 P
(43) Date of publication of application: 18.03.2015
(73) Proprietor: ARKEMA B.V., 3196 KE Vondelingenplaat-Rotterdam (NL)
(72) Inventor: HOEKMAN, Leendert, Cornelis, NL-4461 NM Goes (NL); CONCETTA STARRANTINO, Carmela, Maria, NL-4576 CP Koewacht (NL); WAGEMAKERS, Joannes, Theodorus, Maria, NL-7007 KA Doetinchem (NL); MEURER, Oliver, 47877 Willich (DE)
(74) Representative: Schaefer, Anne-Sophie
(86) International application number: PCT/EP2013/059431
(87) International publication number: WO 2013/167558

(56) References cited:
- EP-A2- 0 560 199
- WO-A1-91/19606
- WO-A1-95/17263
- WO-A1-2005/049219
- US-A- 3 516 811
- US-A- 3 645 778
- US-A- 3 926 103

## Description

### [Field of the invention]

The present invention relates to a coating line and a method for applying a protective coating to hollow glass containers in an integrated glass container manufacturing process.

In particular it relates to a coating line and method for applying a cold end coating to hollow glass containers.

More particularly the present invention relates to a coating line comprising horizontal spray guns for applying a cold end coating to hollow glass containers in a single line and such a method for applying a cold end coating to hollow glass containers.

### [Technical problem]

Hollow glass containers are manufactured from molten glass in moulds at high temperatures. As the surface of these containers is fragile in order to avoid damage such as scratches for example a coating is applied to said surface directly after forming the container. Also in order to preserve the strength of the glass and to prevent any direct glass to glass contact between individual containers, which might lead to the appearance of said scratches, they need to be protected on the surface by a coating.

Nowadays in glass container manufacture a two step coating is applied in order to obtain sufficient scratch resistance and lubrication of the glass containers.

In the first step, the so called hot-end coating (HEC) is applied by means of chemical vapor deposition (CVD) of a metal containing compound on the freshly formed, still hot glass containers arranged in single or double file.

Such a HEC is based on coating precursors that include tin or titanium or may be of any other heat decomposable metallic or organometallic compound.

This is done inside a so called coating tunnel or hood where said hot end coating is applied by chemical vapor deposition to form a thin layer of a metal oxide, for example tin oxide. The objective is to coat the outside of the glass container with a homogenous and even layer except for the so called finish.

Since this coating is applied in the vapour phase on glass containers conveyed along the production line in single file, ensuring a homogeneous distribution of coating material poses few problems. A thin layer of metal oxide, often tin oxide, is the basis for the second coating called a cold-end coating (CEC). The cold-end coating could also comprise a layer of polyethylene wax, which is applied via a water based emulsion. This makes the glass surface slippery, protecting it from scratching and avoiding the containers from sticking to each other when they move collectively on the conveyor. The resultant combined invisible coating lends a virtually unscratchable surface to the glass.

Only the combination of the hot-end coating and the cold-end coating will bring the desired qualities of scratch resistance and lubrication.

The present invention deals with the second step, the application of a cold end coating.

After the hot end coating application, the glass containers are usually passed through a special type of oven also called an annealing lehr. The latter is designed specifically for annealing glass and to cool the containers down in a controlled way. The glass is heated to the annealing point and then slowly cooled down. This process relieves any internal stresses, making the glass much more durable. At this stage the containers are arranged in rows.

Traditionally the cold-end coating is applied when the containers leave the cooling oven. Since the containers are positioned in several rows, the application is carried out by a spray gun or guns which move parallel between respective rows of the containers, positioned above or just between the rows at shoulder height of the containers. The spray pattern of the coating application from above leads automatically to an inhomogeneous distribution of coating material.

In the case of a glass bottle as a hollow glass container most of the material will be applied to its shoulder and much less to the body and heel areas. In practice too much coating will be applied to the shoulder area where it serves no purpose and even leads to adhesion problems with neck labels.

An objective of the present invention is to have an efficient distribution of the cold end coating material.

Another objective of the present invention is to have a coating line that can apply a cold end coating with an efficient distribution on the surface of the container to be protected.

Still another objective of the present invention is a method to apply a cold end coating that is efficiently distributed on the surface of the container to be protected.

Yet another objective of the present invention is a coating line and a method to apply the cold end coating selectively at certain surface areas of the container.

### [BACKGROUND OF THE INVENTION] Prior art

The document US 3,509,852,234 describes a glass container coating machine possessing a plurality of spray nozzles, which move from above between the rows of bottles transported by a conveyer belt. In fact the assembly has moving spray nozzles that move around the bottles in order to coat it completely.

The document WO2002/066389 describes an apparatus for applying a coating to a glass container. The hot end coating applied is inhomogeneous in order to apply the cold end coating to preferred zones. It is very difficult to control the exact application of the hot end coating, especially in terms of delineating any coated zone and defining any particular coating thickness.

The document WO91/019606 describes a method for enhancing the strength of a glass container and strength enhanced glass containers. The coating station for the strength enhancing coating is located on a multiline conveyer configuration either between the lehr and the cold end coating spray station or after the cold end station. This strength enhancing coating, intended to increase burst strength, is not a cold end coating.

The document WO2005/049219 describes a method, apparatus and coating liquid for coating returnable glass containers. The coating in this document is a protective coating applied to returnable containers after cleaning the containers and before refilling them. This method does not take place after the manufacturing of the glass containers.

### [Brief description of the invention]

Surprisingly it has been found that an efficient distribution of the cold end coating material can be achieved when the coating is applied while the containers are on a single line conveyer belt.

Surprisingly it has also been found that an efficient distribution of the cold end coating material can be achieved by using two distinctive cold-end coating steps.

Surprisingly it has also been discovered that with a coating line for containers comprising
- a first cold end coating application with
- a second cold end coating application on a single line conveyer belt wherein the two respective cold end coatings are applied from at least two different directions with an angle of at least 45° between the two directions, an efficient distribution of the cold end coating material can be obtained.

It has also been found that if the cold end coating on the single line conveyer belt is applied by means of spraying from one or more spray guns that are positioned perpendicular to the outer wall of the containers to be coated a further efficiency in the distribution of the cold end coating material is obtained.

It has also been found that the temperature of the container during the second cold end coating application can be less than the temperature of the container during the first cold end coating application.

Additionally it has also been found that a selective distribution of the cold end coating material can be achieved when at least two spray guns are used during the second cold end coating application, each spray gun directed towards a different surface area of the container.

### [Detailed description of the invention]

According to a first aspect, the present invention relates to a coating line for containers comprising a cold end coating application wherein the cold end coating is applied when the containers are on a single line conveyer belt.

According to a second aspect, the present invention relates to a coating line for containers comprising
- a first cold end coating application
- a second cold end coating application when the containers are on a single line conveyer belt
wherein the two respective cold end coatings are applied from at least two different directions with an angle of at least 45° between the two directions.

In a third aspect the present invention relates to a method for applying a coating on the surface of containers comprising the step of applying a cold end coating wherein the cold end coating is applied by spraying on a single line conveyer belt.

In a fourth aspect the present invention relates to a method for applying a coating on the surface of containers comprising the steps of
- applying a hot end coating
- applying first cold end coating
- applying second cold end coating when the containers are on a single line conveyer belt
wherein the two respective cold end coatings are applied from at least two different directions with an angle of at least 45° between the two directions.

In a further aspect the present invention relates to a coating line wherein the temperature of the container during the second cold end coating application is less then 140°, preferably between 40 and 130°C.

According to another further aspect, the present invention relates to a coating line for containers comprising
- a first cold end coating application
- a second cold end coating application when the containers are on a single line conveyer belt
wherein the two respective cold end coatings are applied from at least two different directions with an angle of at least 45° between the two directions and the cold end coatings are applied after the glass container manufacturing process.

According to another further aspect the quantity of the coating applied during the second cold end coating application is greater than the quantity of the coating applied during the first cold end coating application.

In still another aspect the present invention relates to a coating line wherein the cold end coating is applied by means of spraying.

In an additional aspect the present invention relates to a coating line wherein the spraying during the cold end coating application when the containers are on a single line conveyer belt is carried out by one or more spray guns that are positioned perpendicular with respect to the outer wall of the containers to be coated.

In a still further aspect the present invention relates to a coating line wherein the spray guns apply a cold end coating only to a selected area of a container when the containers are on a single line conveyer belt.

In a still further aspect the present invention relates to a coating line wherein at least two spray guns are used during the cold end coating when the containers are on a single line conveyer belt and each spray gun sprays onto a different zone of the container.

In yet another aspect the present invention relates to a container to which has been applied a cold end coating in two discrete steps, a first cold end coating application and a second cold end coating application, wherein the temperature of the container during the second cold end coating application is lower than its temperature during the first cold end coating application, the cold end coating is applied by means of spraying and the spraying during the second cold end coating application is carried out by one or more spray guns that are positioned perpendicular to the outer wall of the containers to be coated.

The term "coating line" as used herein denotes an assembly of essential elements for coating the containers comprising a conveyer belt which transports the containers to respective coating devices together with said respective coating devices.

The term "container" as used herein denotes a receptacle in which a liquid material can be held or carried.

The term "different directions" as used herein means that there is at least an angle of 45° between two different directions. For example from above to from right or to from left means there is an angle of 90° between the two directions; whereas from the left to the right side means there is an angle of 180° between the two directions.

The term "single line" as used herein denotes that a container on the conveyor belt has directly neighbouring containers solely in the direction of the movement of the conveyor belt, meaning in front and behind relative to the movement of the containers.

The term "rows" as used herein denotes that a container on the conveyor belt not only has directly neighbouring glass containers in the direction of the movement of the conveyor belt, but also to its left and/or to its right in the sense of direction of movement of the conveyor belt.

The term "hot-end coating" as used herein denotes that the coating is applied on the hollow container at a temperature between 400°C and 650°C.

The term "cold-end coating" as used herein denotes that the glass container is coated at a temperature of the container less then 150°C.

The term "spray" as used herein denotes a dispersion of liquid droplets dispersed in a gas as a continuous phase.

The terms "spray gun" or "spray nozzle" as used herein denotes a device that generates the spray for distributing the spray over an area.

The term "spray pattern" as used herein denotes the area over which the liquid droplets contact the surface of the container.

### [Figures]

Figure 1 depicts a schematic representation of a coating process for glass containers (1) after molding the containers (12) in a coating line comprising a conveyer belt which transports the containers in a single line (13), a hot end coating device (14) a change to a multiline/row arrangement (15) on a conveyer passing the annealing lehr (16), followed by the cold end application and return to a single line conveyer (13).
Figure 2 depicts a schematic representation of a coating process for glass containers according to the present invention comprising a second cold end coating application (18) in a single line.
Figure 3 depicts a schematic representation of the cold end coating application (17) from above in multiline/row arrangement. The hollow container (1) is coated with a spray (6) which is generated by a spray nozzle (7). The spray nozzle (7) is arranged between the necks (5) of the containers (1). Due to the spray pattern a thick coating (8) is applied at the shoulder zone while the coating gets thinner downwards the body (9).
Figure 4 depicts a more detailed view of a cold end coating application (18) in a single line configuration; wherein figure 4a is a top view showing the transfer of the containers (1) to a single conveyer belt (13) before applying the cold end coating in form of a spray (6) with spray nozzles (7) from both sides; and wherein Figure 4b is a side view where the container (1) on the single line conveyer belt (13) is coated with a spray (6) by one spray nozzle (7) from each side.
Figure 5 depicts a hollow container (1) in the form of a bottle with shoulder (2), body (3) and heel (4) zones. The finish and the neck (5) are indicated as well.
Figure 6 depicts two perpendicular spray nozzles (7) applying a spray (6) with a spray angle (10) at two different positions with respect to the surface (11) of the container (1) to be coated, at an angle of 90° in figure 6a; and tilted at and angle (30) of 12° from the 90°C position in figure 6b.
Figure 7 a) depicts a spray coating arrangement, where a a spray nozzle (7) covers the shoulder (2), the body (3) and the heel (4) of the container (1) at the same time.

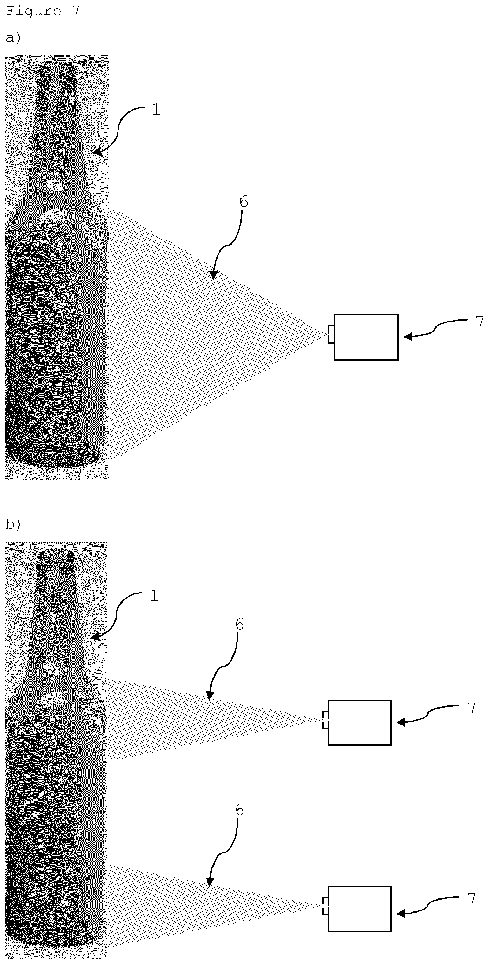

Figure 7 b) depicts a selective spray coating arrangement, where two spray nozzles (7) cover the shoulder (2) and the heel (4) of the container (1).

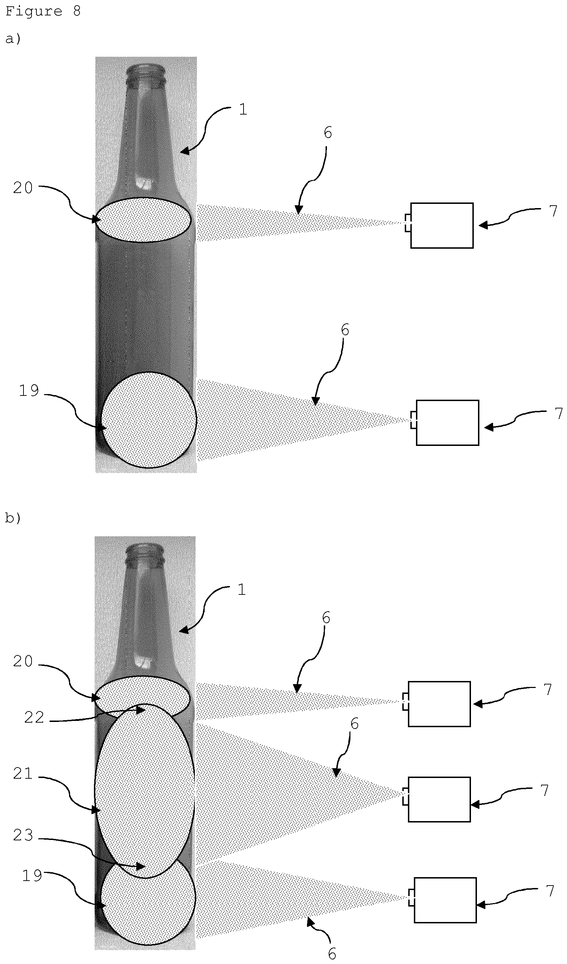

Figure 8 a) depicts a selective spray coating arrangement, where two spray nozzles (7) cover the shoulder (2) and the heel (4) of the container (1) in different spray patterns (19 and 20) for each of the selected areas. The spray pattern (20) on the shoulder (2) is of a horizontal flat pattern, while the spray pattern (19) on the heel (4) is of a round pattern.
Figure 8 b) depicts a spray coating arrangement, where three spray nozzles (7) cover the shoulder (2), the body (3) and the heel (4) of the container (1) in different spray patterns (19, 20 and 21) for each of the selected areas. The spray pattern (21) on the body is of a vertical flat pattern. Between each of the selected areas are overlapping zones (22 and 23).

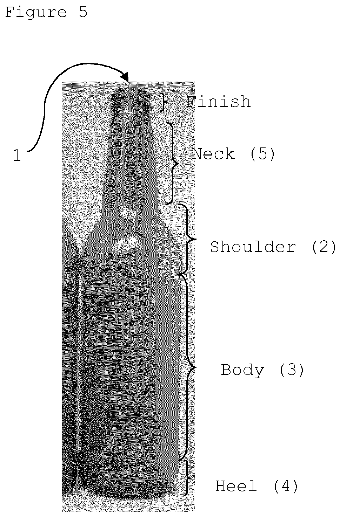

The container according to the present invention could be made out of glass or plastic. Preferably the container is a glass container. More preferably the container is a hollow glass container. Examples of hollow glass containers are bottles and jars. Figure 5 shows a hollow container (1) in form of a bottle with three respective zones: shoulder (2), body (3) and heel (4).

The coating line according to the present invention comprises certain elements. The essential elements of the coating line for coating the containers is a conveyer belt which transports the containers to the respective coating device or devices together with the said coating device or devices. In a preferred embodiment the coating line comprises two distinctive cold end coating applicator units.

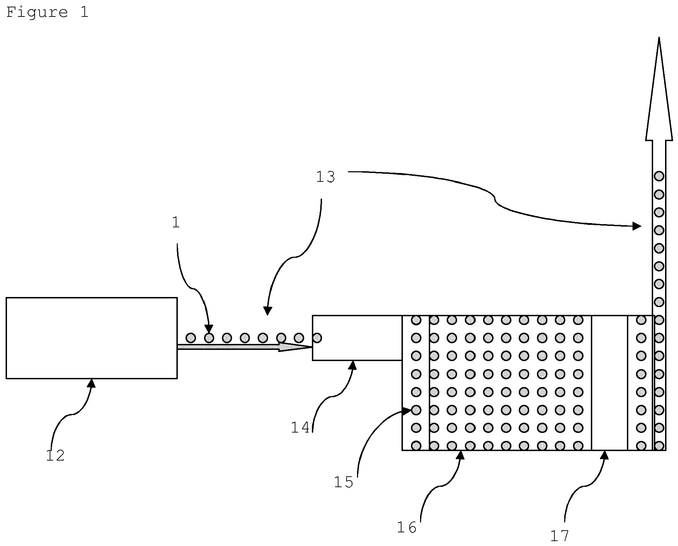

An example of a standard coating line for glass containers is given in figure 1. The schematic representation in figure 1 comprises a glass container production machine (12) that delivers the manufactured containers (1) for example bottles to a single line conveyer belt (13). The conveyer belt (13) transports the glass containers (1) through a hot end coating tunnel (14) whilst still in a single file arrangement. Afterwards a converting unit rearranges the glass containers into multiple rows or lines (15) before they pass through an annealing lehr (16). The containers then pass the cold-end coating unit (17) where they are rearranged into a single file on a conveyer belt (13) and are passed on further for inspection, packaging and labeling for example (not shown in figure 1).

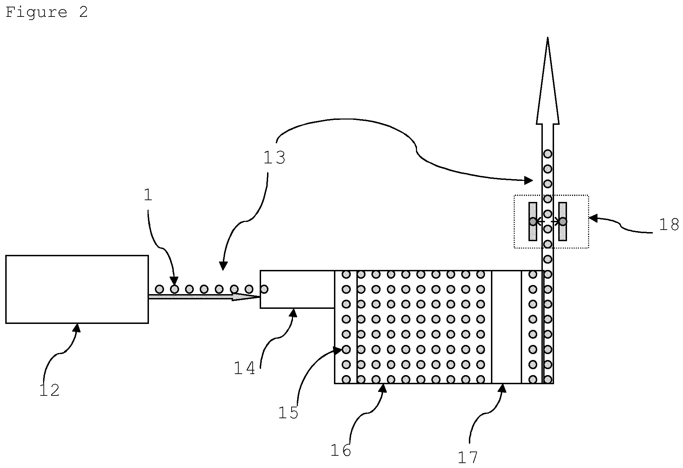

A coating line according to the present invention comprising a cold end coating application wherein cold end coating is applied when the containers are on a single line conveyer belt is shown in figure 2. Shown in figure is a coating line which differs from that depicted in figure 1, in that it comprises another cold end coating application in the form of a second cold-end coating unit (18) sitting on a single line conveyer belt configuration after the first cold end coating unit (17).

In a still preferred embodiment the coating line comprises two distinctive cold end coating applicator units and a hot end coating application.

Preferably the coating line according to the invnetion is located after the glass container manufacturing process. The glass containers are manufactured by molding and the coating line according to the invention is after said container molding in the glass container manufacturing plant.

The hot end coating applied under a hood or in a tunnel is a metal oxide. Preferable this coating is tin oxide or titanium oxide. The tin oxide is derived from the decomposition of an organic tin halogenide, advantageously from monobutyl tin chloride.

The hollow glass containers are transported in a single line by a conveyer through a tunnel formed by the hood. The coating compound is introduced in the hood with a mixture of air and forms the coating on the glass by decomposition at high temperature. By high temperature is meant between 400°C and 650°C.

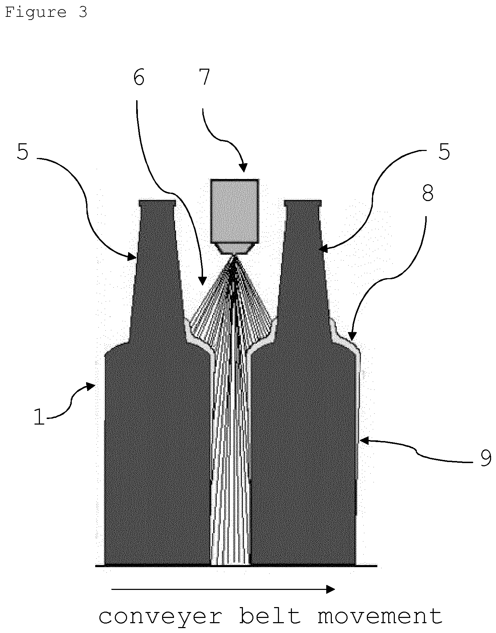

The first cold end coating is applied from above onto the containers. From above means the spray direction is more or less perpendicular to the conveyor belt transporting the containers. The general principle is shown in figure 3. The hollow container (1) is coated with a spray (6) which is generated by a spray nozzle (7). The spray nozzle (7) is arranged between the necks (5) of the containers (1).

The temperature of containers during the application of the first cold end coating is less than 150°C. Preferably the temperature of the containers is between 80°C and 150°C, more preferably between 100°C and 140°C.

Preferable the fist cold end coating is applied by spray guns or spray nozzles.

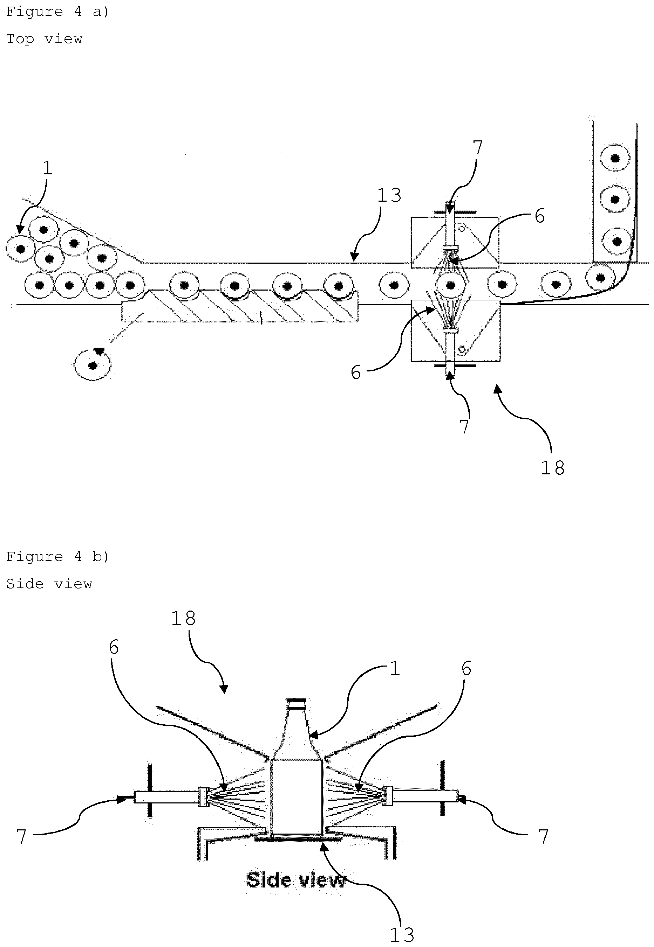

The cold end coating is applied from the side when the containers are on a single line conveyer belt. From the side means that the cold end coating is applied by a coating applicator more or less perpendicular to the surface of the containers on the conveyer belt, as shown in figure 4, where the coating applicator is a spray gun. Perpendicular does not imply that the angle between the coating applicator and the surface or outer wall of the container is exactly 90°. The exact angle could vary some degrees from 90°. The angle between the coating applicator and the surface to be coated can be between 45° and 135°, preferable between 60° and 120°, more preferably between 70° and 110° and advantageously between 75° and 105°.

For the cold end coating applied when the containers are on a single line conveyer belt during the second cold end coating application, from the side means applied from a direction that is different to the one used in the first cold end coating application. Another direction means that there is at least an angle of 45° between the two directions. For example the two directions from above and from the side imply an angle of about 90°C between the two directions.

The first cold end coating and the second cold end coating are applied from at least two different directions. Generally speaking if the first cold end coating is applied from above the containers and the second cold end coating is applied from the side the angle between the two directions is at least 45°, preferably at least 50° and more preferably at least 60°C.

The temperature of the containers during the application of the cold end coating applied when the containers are on a single line conveyer belt is less than 150°C, preferably less than 140°C. Preferably the temperature of the containers is between 0°C and 140°C, more preferably between 15°C and 140°C, advantageously between 30°C and 140°C and more advantageously between 40° and 140°C and even more advantageously between 40°C and 130°C.

In a preferred embodiment the cold end coating applied when the containers are on a single line conveyer belt is applied by spraying.

According to the invention the quantity of the coating applied during the second cold end coating application is greater than the quantity of the coating applied during the first cold end coating application. The quantity ratio depends on the areas selected to be coated. If the second cold end coating application covers nearly the whole body as in figure 7a), the global quantity of the two coatings is taken into account for the quantity ratio. If the second cold end coating is applied to certain areas only as in figure 7b), only the quantity of the first cold end coating applied to the shoulder and the heel is taken into account for the quantity ratio.

Preferably more than 50 wt% more preferably more than 60 wt% and advantageously more than 70 wt% of the cold end coating is applied to an area selected to be coated when the containers are on a single line conveyer belt.

Preferably less than 50wt%, more preferably less than 40wt% and advantageously less than 30wt% of the cold end coating is applied when the containers are not yet on a single line conveyer belt.

With regard to the application method according to the present invention, the cold end coating is applied by spraying.

The cold end coating when the containers are on a single line conveyer belt is applied by means of spray guns or spray nozzles. One or more spray guns or spray nozzles can be used.

If only one spray gun is used either the spray gun rotates around the bottle or the bottle is rotated with the spray gun fixed. It is preferred for the bottle to rotate if there is only one spray gun or spray nozzle.

If there are two or more spray guns the respective spray guns can be installed in opposing positions in order to apply coating to the glass container from opposite sides. Figure 4 shows an embodiment with two spray guns (7) positioned at opposite sides of the container (1) and the conveyer belt (13) that transports the container in a single line.

The cold end coating application method according to the invention requires no electrostatic charge.

In another embodiment of the application of the cold end coating material on selected areas, there are two or more spray guns installed on the same side of the container sitting on the single conveyer belt with each spray gun applying the coating to selected areas of the container as shown in figures 7b) and 8. For example a first spray gun applies the coating to the shoulder (20), a second spray gun applies the coating to the body (21) and a third spray gun applies the coating to the heel (19). An overlapping of the coating at the borders (22 and 23) of the areas selected will arise.

Each spray gun can apply a different quantity of coating and in different spray patterns. A different quantity of coating means that the coating in mg/cm2 deposited on the surface could be different over different coating areas. For instance the coating quantity at the shoulder (2) and at the heel (4) can be more than at the body (3).

In order to apply the coating homogenously over each of the respective areas the container could be rotated.

In still another embodiment two or more spray guns are installed on each side of the container sitting on a single line conveyer belt and each spray gun applies the coating to selected areas of the container from opposite sides similar to what is shown in figure 4b), but with spray gun or nozzle positions being similar to figure 8.

It is possible to apply for example much less or no coating to the body (3) of the container. For example figures 7b) and 8a) shows an embodiment where no coating is applied to the body.

It is possible to use different spray patterns for the selected zones. For example figure 8a) shows different spray patterns for the shoulder and the heel: the heel is coated with a round pattern (19), while the shoulder is coated with a flat horizontal pattern (20). For example figure 8b) shows additionally a horizontal flat pattern for the body (21).

In still another embodiment it possible to apply different concentrations or different products on selected areas, whilst using two or more spray guns. For example the three areas coated with distinctive spray patterns (19), (20) and (21) can be of different coatings or different concentrations of the same or different coatings. For example in figure 8b) the heel area pattern (19) and the shoulder area pattern (20) are coated with a higher concentration while the body pattern area (21) is coated with a lower concentration. Consequently a gradient of the coating on the container surface is obtained.

In one preferred embodiment the selected areas for a cold end coating application are the shoulder area (2) and the heel area (4) while no coating is applied to the body area (3), as shown in figure 7b) and figure 8a). Not applying any coating does not mean that there is no coating at all deposited on the body at this position, since there is an overlap between coatings of different areas. If the shoulder and the body are coated with a minimum coating thickness it cannot be avoided that at least a part of the coating is also applied to an area close to the shoulder and the body.

The position of the spray gun or guns of the first cold end coating application are essentially positioned vertically above the containers to be coated, as shown in figure 3. By vertical is to be understood that the spray gun need not be mounted exactly perpendicularly to the conveyer belt. The spray can also be applied slightly slanting.

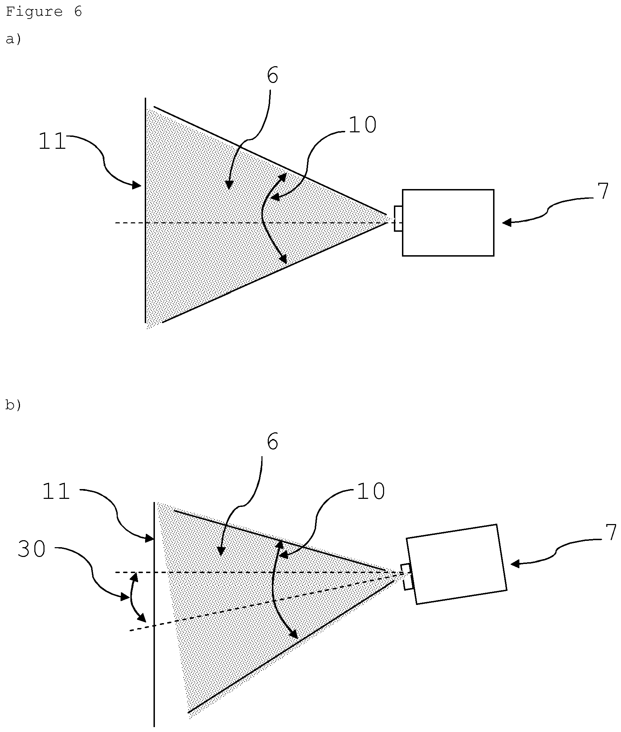

The position of the spray gun or guns of the second cold end coating application applied when the containers are on a single line conveyer belt is perpendicular with respect to the outer wall of the containers to be coated. Perpendicular does not imply that the angle between the spray gun and the outer wall surface of the glass container is exactly 90°. The exact angle of the spray gun could vary somewhat from 90°. The angle between the spray gun and the surface to be coated can be between 45° and 135°, preferable between 60° and 120°, more preferably between 70° and 110° and advantageously between 75° and 105°. This is illustrated in figure 6, where two different positions of the spray guns are illustrated. In figure 6a) the angle between the spray gun (7) and the outer wall surface of the glass container (11) is exactly 90°, while in figure 6b) the angle between the spray gun (7) and the outer wall surface of the glass container (11) is tilted at an angle (30) of about 12° from the perpendicular. This means that the angle between the spray gun and the surface to be coated in figure 6b is 78° for from above and 102° for from below. The spray angle (10) in both figures 6a and 6b is the same at about 50°.

The distance between the surface of the glass container and the exit of the spray gun depends on on the spray angle, on the area desired to be coated and on the container or container size. Preferably the distance is at least 1cm.

The spray angle can vary between 30° and 120°, depending on the height of the container, the distance between the spray gun and the surface to be coated and whether only a certain zone is selected for coating.

The coating material applied during the two cold end coating steps could be the same or different.

The coating material can be an aqueous wax emulsion, either ionic or non ionic, depending on the surfactants used for the preparation of said dispersions.

If the first cold end coating application step and the cold end coating application step applied when the containers are on a single line conveyer belt use the same coating material, it could still differ in its composition as regards the solids content for example.

It is not outside of the scope of the invention to apply further coatings. Additional coatings could be applied before or after the first or second cold end coating step.

An efficient distribution of the cold end coating material provides an improved scratch resistance over the critical areas of the container surface.

The coating line of the present invention can be implemented in the glass manufacturing industry in a filling plant or in the food processing industry.

### [Methods of evaluation] Measurement of scratch resistance

Two bottles are fixed and positioned in such way that their shoulder, body or heel is checked for their scratch resistance. A pneumatic cylinder applies an adjustable force (F1) on the bottles while one of the bottles is moving both ways with respect to the other bottle which is static.

Sensors measure both the applied force on the static bottle holder and the parallel force (F2) due to movement. The latter depends on friction between the bottles.

When the coating is intact the friction is low but increases when the coating abrades. Finally the bottles will scratch which results in a strong increase the force measured in parallel. The amount of movement in combination with the applied force determines the scratch resistance. When a force of F1=200N, is applied a proper coating survives at least 100 movements.

The scratch resistance measurements are monitored by and recorded on a PC. During this or afterwards the coefficient of friction (F2/F1) and its changes can be checked.

Four measurements made and the average calculated are given in the respective tables. If after 1000 movements no scratching indicated by a strong increase of the measured force is observed the evaluation is stopped.

### Estimation of the slip angle

The slip angle is estimated with a tilt table from the company AGR International Inc.. The tilt table measures the angle when a bottle slips in contact with an identical glass surface. This gives an indication of the lubricity of the surface. Three glass containers are placed on the table in a pyramidal configuration. After the start button is pushed, an electric motor increases the angle of inclination of the table upon which the pyramid of bottles is resting at a rate of 3.6° per second. The bottom two bottles are constrained and do not move during testing.

The top container is free to slide and when the tilt angle becomes great enough to overcome the frictional forces between the containers, it begins to slide and contacts a trip bar. When the bottle depresses the trip bar, a switch is opened in the electronic circuitry of the Tilt Table simultaneously stopping the drive motor and applying a brake to the inclined table. This feature prevents coasting and inadvertent measurement of erroneously high tilt angles. The lubricity of the test containers can be expressed either by the angle at which sliding occurs or by the coefficient of static friction. Both measurements can be obtained from a scale on the front of the table. If the slip angle is less then 15°, preferably less then 13° the bottle is considered to be lubricous enough.

### Estimation of surface tension

The surface tension is measured with test inks from Softal electronic GmbH according to DIN ISO 8296. The surface tension values are given Nm/m. If the surface tension is high, meaning more the 54Nm/m, either no or not sufficient lubricating cold end coating has been applied.

### [Examples]

50cl green glass or flint glass water bottles were used. The bottles had a hot end coating of 40 CTU, but also bottles with a 50 CTU hot end coating were used.

Before depositing a further coating all bottles were calcined at 575°C for 20min in order to remove any organic matter.

As a cold end coating material Tegoglas RP40LT and Tegoglas 3000plus from ARKEMA were used.

The coating was applied with a spray gun from Walter Pilot WA XV from Walther Spritz- und Lackiersysteme GmbH.

The coating was applied from a vertical position (v) for simulating the application of the cold end coating to the containers from above or from a horizontal position (h) with a spray nozzle more or less perpendicular (15° angle) relative to the bottle surface to be coated for simulating the application of the cold end coating from the side or from a combination of both directions.

The scratch resistance was evaluated 24 hours after the application of the cold end coating.

**Table 1 - Coating application with one perpendicular spray gun of 2 ml of solution of Tegoglas RP40LT or Tegoglas 3000plus at different positions of the spray guns**

| | Comparative Example 1 | Example 1 | Example 2 | Example 3 |
|---|---|---|---|---|
| | Position of the spray guns for CEC application V=vertical at 125°C container temperature and H=horizontal at 50°C container temperature | | | |
| | V | H | V+H | V+H |
| Tegoglas RP40LT | V 0.5wt% | H 0.5wt% | V 0.1wt% H 0.5wt% | V 0.1wt% |
| Tegoglas 3000plus | - | - | - | H 0.5wt% |

| | Average number of movements scratch resistance test at F = 200N | | | |
|---|---|---|---|---|
| Shoulder (2) | 5 | 7 | 17 | 40 |
| Body (3) | 9 | 18 | 800 | 788 |
| Heel (4) | 5 | 21 | 579 | 575 |
| Average | 6 | 15 | 465 | 467 |

| | Slip angle [°] | | | |
|---|---|---|---|---|
| | 19 | 11 | 9 | 10 |

| | Surface tension [Nm/m] | | | |
|---|---|---|---|---|
| Neck (5) | 38 | 52 | 40 | 40 |
| Body (3) | >54 | 40 | 40 | 40 |

Table 1 shows that the horizontal application (perpendicular to the bottle surface) either alone (example 1) or in combination with vertical application (example 2 and 3) allows a more efficient application of the cold end coating leading to a better scratch resistance in terms of a higher average number of movements, a lower slip angle and a lower surface tension at the body.

**Table 2 - Coating application with one spray gun of 2 ml of 0.5wt% solution of Tegoglas 3000plus at different positions of the spray guns**

| | Comparative Example 2 | Comparative Example 3 | Example 4 | Example 5 |
|---|---|---|---|---|
| | Position of the spray guns for CEC application V=vertical at 125°C container temperature and H=horizontal at 50°C container temperature | | | |
| | V | V | H | V+H |
| | Average number of movements scratch resistance test at F = 200N | | | |
| Shoulder (2) | 7 | 5 | 19 | 292 |
| Body (3) | 55 | 5 | 762 | 723 |
| Heel (4) | 5 | 5 | 821 | 155 |
| Average | 22 | 5 | 534 | 390 |

| | Slip angle [°] | | | |
|---|---|---|---|---|
| | 12 | 20 | 10 | 9 |

| | Surface tension [Nm/m] | | | |
|---|---|---|---|---|
| Body (3) | 42 | 52 | 38 | 38 |

Table 2 shows that the horizontal application (perpendicular to the bottle surface) either alone (example 4) or in combination with a vertical application (example 5) allows a more efficient application of the cold end coating leading to a better scratch resistance in terms of a higher average number of movements, a lower slip angle and a lower surface tension.

**Table 3 - Coating application with one perpendicular spray gun of 2 ml of 0.5 wt% solution of Tegoglas 3000plus at different glass bottle temperatures**

| | Example 4 | Example 6 | Example 7 | Example 8 |
|---|---|---|---|---|
| | Bottle temperature T during coating application / [°C] | | | |
| | 50 | 75 | 100 | 125 |
| | Average number of movements scratch resistance test at F = 200N | | | |
| Shoulder (2) | 19 | 323 | 16 | 59 |
| Body (3) | 762 | >1000 | >1000 | >1000 |
| Heel (4) | 821 | >1000 | 289 | 543 |
| Average | 534 | 774 | 435 | 534 |

| | Slip angle [°] | | | |
|---|---|---|---|---|
| | 10 | 7 | 6 | 9 |

| | Surface tension [Nm/m] | | | |
|---|---|---|---|---|
| Body (3) | 38 | 40 | 38 | 40 |

Table 3 shows that the coating application according to the present invention can be done over a wide temperature interval, allowing the application of the cold end coating also further down the coating line where the containers would be colder.

**Table 4 - Selective coating application of 2ml 0.5wt% Tegoglass 300plus with multiple spray guns at 50°C bottle temperature.**

| | Example 9 | Example 10 | Example 11 | Example 12 |
|---|---|---|---|---|
| Application at | (2) + (3) + (4) | (4) | (3) | (2) |

| | Average number of movements scratch resistance test at F = 200N | | | |
|---|---|---|---|---|
| Shoulder (2) | 764 | - | - | 608 |
| Body (3) | >1000 | - | >1000 | - |
| Heel (4) | >1000 | 733 | - | - |

| | Surface tension [Nm/m] | | | |
|---|---|---|---|---|
| Shoulder (2) | 36 | >54 | >54 | 38 |
| Body (3) | 36 | 38 | 38 | 40 |
| Heel (4) | 36 | 38 | 44 | >54 |

Table 4 shows that the coating application according to the present invention can be done selectively on certain areas of the container.

## Claims

1. A coating line for containers comprising
a) a first cold end coating application
b) a second cold end coating application which is applied when the containers are on a single line conveyer belt
wherein the two respective cold end coatings are applied from at least two different directions with an angle of at least 45° between the two directions and wherein the temperature of containers during the application of both cold end coatings is less than 150°C.

2. A coating line according to claim 1 further comprising a hot end coating application before the first cold end coating application.

3. The coating line according to any of claims 1 to 2 wherein the cold end coating is applied by means of spraying.

4. The coating line according to any of claims 1 to 2 wherein at least one cold end coating is applied by means of spraying and preferably both cold end coatings are applied by means of spraying.

5. The coating line according to claim 3 or 4 wherein the spraying during the cold end coating application when the containers are on a single line conveyer belt is made by one or more spray guns that are positioned perpendicular to the outer wall of the containers to be coated.

6. The coating line according to any of claim 5 wherein the spray guns apply the cold end coating to a selective area of the container.

7. The coating line according to any of claim 5 wherein at least two spray guns are used during the cold end coating application applied when the containers are on a single line conveyer belt, each spray gun sprays on a different area of the container.

8. The coating line according to any of claim 7 wherein at least two different spray patterns are used by the spray guns on different areas of the container.

9. The coating line according to any of claims 1 to 8 wherein the containers are hollow glass containers.

10. The coating line according to any of claims 1 to 9 wherein the cold end coating is chosen from aqueous wax emulsions.

11. The coating line according to any of claims 1 to 10 wherein the temperature of the containers during the second cold end coating application is less then the temperature during the first cold end coating application.

12. The coating line according to any of claims 1 to 10 wherein the temperature of the container during the second cold end coating application is less then 140°C, preferably between 40°C and 130°C.

13. The coating line according to any of claims 1 to 12 wherein the quantity of the coating applied during the second cold end coating application is greater than the quantity of the coating applied during the first cold end coating application.

14. The coating line according to any of claims 1 to 13 wherein the coating line is located after the container manufacturing process.

15. A method for applying a coating on the surface of containers comprising the steps of applying
a) a first cold end coating application
b) a second cold end coating application wherein the cold end coating is applied when the containers are on a single line conveyer belt
wherein the two respective cold end coatings are applied from at least two different directions with an angle of at least 45° between the two directions and wherein the temperature of containers during the application of both cold end coating is less than 150°C.

16. A method according to claim 15 wherein the coating is applied the after the container manufacturing process.

17. The method according to claim 15 or 16 comprising the step of applying a hot end coating.

18. A method according to claim 15 wherein the quantity of the coating applied during the second cold end coating application is greater than the quantity of the coating applied during the first cold end coating application.

19. A method for applying a coating on the surface of a glass container according to any of claims 15 or 18 wherein the spraying during the cold end coating application applied when the containers are on a single line conveyer belt, is made by one or more spray guns that are positioned perpendicular to the outer wall of the containers to be coated.

20. A glass container to which a coating has been applied by means of a method according to any of claims 15 to 19, preferably using a coating line according to claims 1 to 14.

## Patentansprüche

1. Beschichtungsanlage für Behälter, umfassend
a) Aufbringen einer ersten Kaltendbeschichtung,
b) Aufbringen einer zweiten Kaltendbeschichtung, die aufgebracht wird, während sich die Behälter auf einem einzelnen Förderband befinden,
wobei die beiden entsprechenden Kaltendbeschichtungen aus wenigstens zwei verschiedenen Richtungen mit einem Winkel von wenigstens 45° zwischen den beiden Richtungen aufgebracht werden und wobei die Temperatur der Behälter während des Aufbringens beider Kaltendbeschichtungen weniger als 150 °C beträgt.

2. Beschichtungsanlage gemäß Anspruch 1, ferner umfassend Aufbringen einer Heißendbeschichtung vor dem Aufbringen der ersten Kaltendbeschichtung.

3. Beschichtungsanlage gemäß einem der Ansprüche 1 bis 2, wobei die Kaltendbeschichtung durch Sprühen aufgebracht wird.

4. Beschichtungsanlage gemäß einem der Ansprüche 1 bis 2, wobei wenigstens eine Kaltendbeschichtung durch Sprühen aufgebracht wird und vorzugsweise beide Kaltendbeschichtungen durch Sprühen aufgebracht werden.

5. Beschichtungsanlage gemäß Anspruch 3 oder 4, wobei das Sprühen während des Aufbringens der Kaltendbeschichtung, während sich die Behälter auf einem einzigen Förderband befinden, durch eine oder mehrere Sprühpistolen durchgeführt wird, die senkrecht der der Außenwand der zu beschichtenden Beschälter angeordnet sind.

6. Beschichtungsanlage gemäß einem von Anspruch 5, wobei die Sprühpistolen die Kaltendbeschichtung auf einen selektiven Bereich des Behälters aufbringen.

7. Beschichtungsanlage gemäß einem von Anspruch 5, wobei bei dem Aufbringen der Kaltendbeschichtung, die aufgebracht wird, während sich die Behälter auf einem einzigen Förderband befinden, wenigstens zwei Sprühpistolen verwendet werden, wobei jede Sprühpistole auf einen anderen Bereich des Behälters sprüht.

8. Beschichtungsanlage gemäß einem von Anspruch 7, wobei wenigstens zwei verschiedene Sprühstrukturen von den Sprühpistolen auf verschiedene Bereiche des Behälters verwendet werden.

9. Beschichtungsanlage gemäß einem der Ansprüche 1 bis 8, wobei die Behälter hohle Glasbehälter sind.

10. Beschichtungsanlage gemäß einem der Ansprüche 1 bis 9, wobei die Kaltendbeschichtung aus wässrigen Wachsemulsionen ausgewählt ist.

11. Beschichtungsanlage gemäß einem der Ansprüche 1 bis 10, wobei die Temperatur der Behälter während des Aufbringens der zweiten Kaltendbeschichtung kleiner als die Temperatur während des Aufbringens der ersten Kaltendbeschichtung ist.

12. Beschichtungsanlage gemäß einem der Ansprüche 1 bis 10, wobei die Temperatur des Behälters während des Aufbringens der zweiten Kaltendbeschichtung weniger als 140 °C beträgt, vorzugsweise zwischen 40 °C und 130 °C.

13. Beschichtungsanlage gemäß einem der Ansprüche 1 bis 12, wobei die Menge der Beschichtung, die während des Aufbringens der zweiten Kaltendbeschichtung aufgebracht wird, größer ist als die Menge der Beschichtung, die während des Aufbringens der ersten Kaltendbeschichtung aufgebracht wird.

14. Beschichtungsanlage gemäß einem der Ansprüche 1 bis 13, wobei die Beschichtungsanlage nach dem Behälterherstellungsverfahren angeordnet ist.

15. Verfahren zum Aufbringen einer Beschichtung auf die Oberfläche von Behältern, umfassend die Schritte des Aufbringens
a) Aufbringen einer ersten Kaltendbeschichtung,
b) Aufbringen einer zweiten Kaltendbeschichtung, wobei die Kaltendbeschichtung aufgebracht wird, während sich die Behälter auf einem einzelnen Förderband befinden,
wobei die beiden entsprechenden Kaltendbeschichtungen aus wenigstens zwei verschiedenen Richtungen mit einem Winkel von wenigstens 45° zwischen den beiden Richtungen aufgebracht werden und wobei die Temperatur der Behälter während des Aufbringens beider Kaltendbeschichtungen weniger als 150 °C beträgt.

16. Verfahren gemäß Anspruch 15, wobei die Beschichtung die nach dem Behälterherstellungsverfahren aufgebracht wird.

17. Verfahren gemäß Anspruch 15 oder 16, umfassend den Schritt des Aufbringens einer Heißendbeschichtung.

18. Verfahren gemäß Anspruch 15, wobei die Menge der Beschichtung, die während des Aufbringens der zweiten Kaltendbeschichtung aufgebracht wird, größer ist als die Menge der Beschichtung, die während des Aufbringens der ersten Kaltendbeschichtung aufgebracht wird.

19. Verfahren zum Aufbringen einer Beschichtung auf die Oberfläche eines Glasbehälters gemäß einem der Ansprüche 15 oder 18, wobei das Sprühen während des Aufbringens der Kaltendbeschichtung, die aufgebracht wird, während sich die Behälter auf einem einzigen Förderband befinden, durch eine oder mehrere Sprühpistolen durchgeführt wird, die senkrecht der der Außenwand der zu beschichtenden Beschälter angeordnet sind.

20. Glasbehälter, auf den eine Beschichtung mithilfe eines Verfahrens gemäß einem der Ansprüche 15 bis 19 aufgebracht worden ist, vorzugsweise unter Verwendung einer Beschichtungsanlage gemäß Ansprüchen 1 bis 14.

## Revendications

1. Ligne de revêtement pour récipients comprenant :
a) une première application de revêtement à froid,
b) une deuxième application de revêtement à froid, qui est réalisée quand les récipients sont sur une seule bande transporteuse de ligne
dans laquelle les deux revêtements à froid respectifs sont appliqués à partir d'au moins deux directions différentes avec un angle d'au moins 45° entre les deux directions et dans laquelle la température des récipients pendant l'application des deux revêtements à froid est inférieure à 150 °C.

2. Ligne de revêtement selon la revendication 1 comprenant en outre une application de revêtement à chaud avant la première application de revêtement à froid.

3. Ligne de revêtement selon l'une quelconque des revendications 1 à 2 dans laquelle le revêtement à froid est appliqué par pulvérisation.

4. Ligne de revêtement selon l'une quelconque des revendications 1 à 2 dans laquelle au moins un revêtement à froid est appliqué par pulvérisation et de préférence les deux revêtements à froid sont appliqués par pulvérisation.

5. Ligne de revêtement selon la revendication 3 ou 4 dans laquelle la pulvérisation pendant l'application de revêtement à froid quand les récipients sont sur une seule bande transporteuse de ligne est réalisée par un ou plusieurs pistolets de pulvérisation qui sont positionnés perpendiculairement à la paroi externe des récipients à revêtir.

6. Ligne de revêtement selon l'une quelconque de la revendication 5 dans laquelle les pistolets de pulvérisation appliquent le revêtement à froid à une zone sélective du récipient.

7. Ligne de revêtement selon l'une quelconque de la revendication 5 dans laquelle au moins deux pistolets de pulvérisation sont utilisés pendant l'application de revêtement à froid réalisée quand les récipients sont sur une seule bande transporteuse de ligne, chaque pistolet de pulvérisation pulvérisant sur une zone différente du récipient.

8. Ligne de revêtement selon l'une quelconque de la revendication 7 dans laquelle au moins deux motifs de pulvérisation différents sont utilisés par les pistolets de pulvérisation sur différentes zones du récipient.

9. Ligne de revêtement selon l'une quelconque des revendications 1 à 8 dans laquelle les récipients sont des récipients en verre creux.

10. Ligne de revêtement selon l'une quelconque des revendications 1 à 9 dans laquelle le revêtement à froid est choisi parmi les émulsions aqueuses de cire.

11. Ligne de revêtement selon l'une quelconque des revendications 1 à 10 dans laquelle la température des récipients pendant la deuxième application de revêtement à froid est inférieure à la température pendant la première application à froid.

12. Ligne de revêtement selon l'une quelconque des revendications 1 à 10 dans laquelle la température du récipient pendant la deuxième application de revêtement à froid est inférieure à 140 °C, de préférence entre 40 °C et 130 °C.

13. Ligne de revêtement selon l'une quelconque des revendications 1 à 12 dans laquelle la quantité du revêtement appliqué pendant la deuxième application de revêtement à froid est supérieure à la quantité du revêtement appliqué pendant la première application de revêtement à froid.

14. Ligne de revêtement selon l'une quelconque des revendications 1 à 13, la ligne de revêtement étant située après le procédé de fabrication de récipients.

15. Procédé d'application d'un revêtement sur la surface de récipients comprenant les étapes de réalisation
a) d'une première application de revêtement à froid,
b) d'une deuxième application de revêtement à froid, le revêtement à froid étant appliqué quand les récipients sont sur une seule bande transporteuse de ligne
dans lequel les deux revêtements à froid respectifs sont appliqués à partir d'au moins deux directions différentes avec un angle d'au moins 45° entre les deux directions et dans lequel la température des récipients pendant l'application des deux revêtements à froid est inférieure à 150 °C.

16. Procédé selon la revendication 15 dans lequel le revêtement est appliqué le après le procédé de fabrication de récipients.

17. Procédé selon la revendication 15 ou 16 comprenant l'étape d'application d'un revêtement à chaud.

18. Procédé selon la revendication 15 dans lequel la quantité du revêtement appliqué pendant la deuxième application de revêtement à froid est supérieure à la quantité du revêtement appliqué pendant la première application de revêtement à froid.

19. Procédé d'application d'un revêtement sur la surface d'un récipient en verre selon l'une quelconque des revendications 15 et 18 dans lequel la pulvérisation pendant l'application de revêtement à froid réalisée quand les récipients sont sur une seule bande transporteuse de ligne est effectuée par un ou plusieurs pistolets de pulvérisation qui sont positionnés perpendiculairement à la paroi externe des récipients à revêtir.

20. Récipient en verre auquel un revêtement a été appliqué au moyen d'un procédé selon l'une quelconque des revendications 15 à 19, de préférence en utilisant une ligne de revêtement selon les revendications 1 à 14.
